# EUROPÄISCHE PATENTSCHRIFT

(11) **EP 2 283 304 B1**
(45) Veröffentlichungstag und Bekanntmachung des Hinweises auf die Patenterteilung: **14.09.2016**
(21) Anmeldenummer: 09737962.2
(22) Anmeldetag: 01.04.2009
(51) Int. Cl.: G01B 9/02

(54) **ANORDNUNG ZUM AUSRICHTEN EINES MESSOBJEKTS RELATIV ZU EINEM DETEKTOR, INTERFEROMETRISCHE ANORDNUNG SOWIE AUSRICHTVERFAHREN**
ARRANGEMENT FOR ALIGNING A MEASURED OBJECT WITH A DETECTOR, INTERFEROMETRIC ARRANGEMENT, AND ALIGNMENT METHOD
AGENCEMENT POUR ALIGNER UN OBJET À MESURER PAR RAPPORT À UN DÉTECTEUR, ENSEMBLE INTERFÉROMÉTRIQUE ET PROCÉDÉ D'ALIGNEMENT

(30) Priorität: 30.04.2008 DE 102008001476
(43) Veröffentlichungstag der Anmeldung: 16.02.2011
(73) Patentinhaber: Robert Bosch GmbH, 70442 Stuttgart (DE)
(72) Erfinder: FLEISCHER, Matthias, 73760 Ostfildern (DE)
(86) Internationale Anmeldenummer: PCT/EP2009/053877
(87) Internationale Veröffentlichungsnummer: WO 2009/132918

(56) Entgegenhaltungen:
- JP-A- 2006 084 205
- US-A- 5 900 940
- US-A1- 2008 170 239
- US-B1- 6 618 496

## Beschreibung

### Stand der Technik

Die Erfindung betrifft eine Anordnung zum Ausrichten eines Messobjekts relativ zu einem Detektor gemäß dem Oberbegriff des Anspruchs 1, eine interferometrische Anordnung gemäß Anspruch 9 sowie ein Verfahren zum Ausrichten eines Messobjekts relativ zu einem Detektor gemäß dem Oberbegriff des Anspruchs 11 Interferometer werden zur präzisen Vermessung von Messobjekten, insbesondere mit ebenen Flächen, eingesetzt. Da der maximal zulässige, messbare Winkelbereich der Oberfläche begrenzt ist, ist es notwendig, zuerst das Messobjekt in der Winkellage zum Detektor auszurichten. Insbesondere bei mit kurzkohärentem Licht arbeitenden Interferometern, wie Weißlichtinterferometern, mit geringer, maximaler Messtiefe können minimale Winkelabweichungen dazu führen, dass die eigentliche interferometrische Messung nicht mehr möglich ist.

Zum Ausrichten des Messobjektes relativ zu dem Detektor ist es bekannt, interferometrische Teilmessungen durchzuführen und anhand der Abbildung auf dem Detektor eine manuelle Ausrichtung des Messobjektes vorzunehmen. Dies setzt jedoch voraus, dass das Messobjekt, um zumindest in Teilbereichen ein Interferenzmuster auf den Detektor zu erhalten, bereits genügend genau zum Detektor ausgerichtet ist. Diese Grobausrichtung bleibt dem Anwender überlassen, der anhand des Helligkeitseindrucks (Lichtintensität) des Detektorbildes (Kamerabildes) versucht, eine gute Ausrichtlage zu ermitteln.

Daneben sind automatische Ausrichtsysteme bekannt, die einen mechanischen Winkelscan des Messobjektes durchführen. Dabei wird die Lage des Messobjektes relativ zu dem Detektor eingestellt, in der im Detektorbild die größte Lichtintensität festgestellt wird. Nachteilig bei der beschriebenen Vorgehensweise ist, dass sich die Lichtintensität im Bereich des Lichtintensitätsmaximums nur noch geringfügig mit der Winkellage des Messobjektes ändert, sodass eine hochgenaue Ausrichtung des Messobjektes zum Detektor schwierig realisierbar ist.

Das Dokument US5900940 offenbart eine Anordnung zum Ausrichten eines Messobjektes.

### Offenbarung der Erfindung

### Technische Aufgabe

Der Erfindung liegt daher die Aufgabe zugrunde, eine Anordnung zum Ausrichten eines Messobjektes relativ zu einem Detektor vorzuschlagen, bei der auf einfache Weise eine hochgenaue Ausrichtung des Messobjektes hinsichtlich seiner Winkellage relativ zu dem Detektor möglich ist. Ebenso besteht die Aufgabe darin, eine interferometrische Anordnung mit einer entsprechend verbesserten Ausrichtanordnung vorzuschlagen. Des Weiteren besteht die Aufgabe darin, ein im Hinblick auf eine verbesserte Ausrichtgenauigkeit optimiertes Ausrichtverfahren vorzuschlagen.

### Technische Lösung

Diese Aufgabe wird hinsichtlich der Anordnung zum Ausrichten eines Messobjektes mit den Merkmalen des Anspruchs 1, hinsichtlich der interferometrischen Anordnung mit den Merkmalen des Anspruchs 10 und hinsichtlich des Ausrichtverfahrens mit den Merkmalen des Anspruchs 12 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, die manuelle Beurteilung der Lichtintensität oder die automatische Messung der Lichtintensität vom Beleuchtungsmaximum weg auf die Flanken eines Beleuchtungsintensitätsverlaufs über die Winkelstellung des Messobjektes relativ zum Detektor zu verlagern, damit bereits minimale Winkeländerungen signifikante Veränderungen der am Detektorbild feststellbaren Lichtintensität der auf dem Detektor auftreffenden, vom Messobjekt reflektierten Lichtstrahlen zur Folge haben. Dies wird bei einer nach dem Konzept der Erfindung ausgebildeten Anordnung zum Ausrichten eines Messobjektes hinsichtlich seiner Winkellage relativ zu einem Detektor dadurch erreicht, dass anstelle eines einzigen Beleuchtungsmittels mindestens zwei, separat ansteuerbare (Teil-)Beleuchtungsmittel vorgesehen werden. Bei nicht exakt relativ zum Detektor ausgerichtetem Messobjekt ist die Lichtintensität der auf dem Detektor auftreffenden, von dem Messobjekt reflektierten Lichtstrahlen davon abhängig, welches der Teilbeleuchtungsmittel gerade angesteuert, d. h. aktiv ist. Dies ist darauf zurückzuführen, dass mit den Teilbeleuchtungsmitteln unterschiedliche Teilflächen der Oberfläche des Messobjektes beleuchtet werden, wodurch beispielsweise, wenn das Messobjekt mit einem ersten Teilbeleuchtungsmittel beleuchtet wird, ein größerer Anteil von Lichtstrahlen an dem Detektor vorbeistrahlt, als wenn das Messobjekt mit einem zweiten Teilbeleuchtungsmittel beleuchtet wird. Im Idealfall, d. h. bei exakt zu dem Detektor in seiner Winkellage ausgerichtetem Messobjekt bleibt die Lichtintensität der auf dem Detektor auftreffenden, von dem Messobjekt reflektierten Lichtstrahlen, unabhängig davon, welche Teilbeleuchtungsmittel angesteuert werden konstant oder die Lichtintensitäten stehen in einem definierten Größenverhältnis zueinander. Dies kann als Indikator für die Ausrichtgüte und als Maß für das notwendige manuelle oder automatische Verstellen, insbesondere Verkippen des Messobjektes relativ zum Detektor, genutzt werden. Anders ausgedrückt kann das Messobjekt so lange relativ zum Detektor verstellt werden, bis die am Detektor ankommende, vorzugsweise mit dem Detektor ermittelte Lichtintensität, also der Helligkeitseindruck des Detektorbildes unabhängig davon, welches Teilbeleuchtungsmittel angesteuert wird, zumindest näherungsweise konstant bleibt oder bis sich ein bestimmtes Intensitätsverhältnis einstellt. Bevorzugt ist der Detektor mit einer Digitalkamera, insbesondere mit einem CCD-Chip ausgestattet. Besonders bevorzugt ist es dabei, wenn dem Kamera-Chip (lichtempfindlicher Sensor) eine Aperturblende zugeordnet ist, die sich im Strahlengang des von dem Messobjekt reflektierten Lichtes zwischen dem Kamerachip und dem Messobjekt befindet.

Besonders bevorzugt ist eine Ausführungsform der Ausrichtanordnung, bei der eine sogenannte Köhler' sche Beleuchtungsanordnung realisiert ist und die Teilbeleuchtungsmittel in einer Blendenebene der Linse, bzw. der Linsenanordnung zur Parallelisierung des von den Teilbeleuchtungsmitteln ausgestrahlten Lichtes angeordnet sind.

In Weiterbildung der Erfindung ist mit Vorteil vorgesehen, dass die Teilbeleuchtungsmittel jeweils mindestens eine LED umfassen. Beispielsweise umfassen die Beleuchtungsmittel einen Vier-LED-Chip. Dieser kann, wenn jeweils zwei LEDs gemeinsam angesteuert werden, zwei Teilbeleuchtungsmittel bilden. Im Falle der Realisierung einer separaten Ansteuermöglichkeit der einzelnen LEDs können mit einem derartigen Vier-LED-Chip vier Teilbeleuchtungsmittel realisiert werden.

Besonders bevorzugt ist eine Ausführungsform, bei der die Teilbeleuchtungsmittel symmetrisch zu einer optischen Achse der Linse bzw. der Linsenanordnung angeordnet sind. In diesem Fall ist die optimale Winkellage des Messobjektes relativ zum Detektor erreicht, wenn die Lichtintensität der auf dem Detektor auftreffenden Lichtstrahlen konstant ist, unabhängig davon, welche der Teilbeleuchtungsmittel gerade aktiv sind. Es ist jedoch auch eine Ausführungsform realisierbar, bei der die Teilbeleuchtungsmittel asymmetrisch zur optischen Achse der Linse bzw. der Linsenanordnung angeordnet sind. In diesem Fall ist die optimale Winkellage des Messobjektes relativ zum Detektor dann erreicht, wenn die mit den unterschiedlichen Teilbeleuchtungsmitteln am Detektor erzielten Lichtintensitäten einen bestimmten Verhältniswert erreichen.

Besonders bevorzugt ist eine Ausführungsform, bei der die Teilbeleuchtungsmittel im Wechsel, vorzugsweise vielfach hintereinander, ansteuerbar sind. Hierdurch kann während des Ausrichtvorgangs andauernd das Lichtintensitätsverhältnis der mit den Teilbeleuchtungsmitteln erzeugten, am Detektor erfassbaren Lichtintensitäten ermitteln werden.

Es ist eine Ausführungsform der Ausrichtanordnung realisierbar, bei der die Lichtintensität der am Detektor auftreffenden Lichtstrahlen manuell hinsichtlich des Helligkeitseindrucks des Detektorbildes, insbesondere des Kamerabildes, beurteilt wird. Besonders bevorzugt ist jedoch eine Ausführungsform des Detektors, bei der die Lichtintensität der jeweils auftreffenden Lichtstrahlen vom Detektor gemessen und vorzugsweise auch, beispielsweise auf einem mit einer Lageeinheit des Detektors verbundenen Bildschirm, angezeigt wird.

Besonders bevorzugt ist eine Ausführungsform, bei der der Detektor auf Basis der Lichtintensitäten der im Wechsel angesteuerten Teilbeleuchtungsmittel einen optischen und/oder akustischen Indikator für die Ausrichtgüte erzeugend ausgebildet ist. Vorzugsweise setzt der Detektor, bzw. eine Logikeinheit des Detektors, hierzu die, insbesondere im Wechsel ermittelten, Lichtintensitäten der unterschiedlichen Teilbeleuchtungsmittel zueinander ins Verhältnis und zeigt den Verhältniswert beispielsweise als graphischen Indikatorbalken an.

Im Hinblick auf die Ausbildung der Stellmittel gibt es unterschiedliche Möglichkeiten. So ist es beispielsweise denkbar, manuelle Stellmittel vorzusehen, beispielsweise in Form einer Stellschraube, insbesondere in Form einer Mikrometerstellschraube, mit Hilfe derer das Messobjekt in seiner Winkellage relativ zum Detektor verstellbar ist. Zusätzlich oder alternativ können automatisch ansteuerbare Stellmittel, beispielsweise in Form mindestens eines Piezostellers vorgesehen werden, die das Messobjekt in Abhängigkeit der mittels des Detektors bestimmten Lichtintensitäten der Teilbeleuchtungsmittel relativ zum Detektor verstellen.

Besonders bevorzugt ist eine Ausführungsform der Ausrichtanordnung, bei der die Teilbeleuchtungsmittel kurzkohärentes Licht aussendend ausgebildet sind. Bevorzugt ist die Ausrichtanordnung Bestandteil eines Weißlichtinterferometers, wobei die Beleuchtungsmittel der Ausrichteinrichtung besonders bevorzugt die Beleuchtungsmittel zur Durchführung der interferometrischen Messung sind. Dabei ist es besonders bevorzugt, wenn zum Zwecke der interferometrischen Messung sämtliche Teilbeleuchtungsmittel gleichzeitig angesteuert, d. h. aktiv, sind.

Die Erfindung führt auch auf eine interferometrische Anordnung zum Vermessen eines Messobjektes. Erfindungsgemäß ist vorgesehen, dass die interferometrische Anordnung mit einer nach dem Konzept der Erfindung ausgebildeten Anordnung zum Ausrichten des Messobjektes relativ zum Detektor, insbesondere einer Digitalkamera, ausgestattet ist.

Wie angedeutet, ist es besonders bevorzugt, wenn die Beleuchtungsmittel der Anordnung zum Ausrichten des Messobjektes relativ zu dem Detektor gleichzeitig die Beleuchtungsmittel zum Beleuchten des Objektes während der interferometrischen Messung sind, wobei es besonders bevorzugt ist, wenn während der interferometrischen Messung sämtliche Teilbeleuchtungsmittel aktiv, d. h. angesteuert sind.

Die Erfindung führt auch auf ein Verfahren zum Ausrichten eines Messobjektes relativ zu einem Detektor, vorzugsweise unter Verwendung einer zuvor beschriebenen Ausrichtanordnung. Erfindungsgemäß ist vorgesehen, dass das Messobjekt während des Ausrichtvorgangs nicht mit einem einzigen Beleuchtungsmittel, sondern vorzugsweise im Wechsel mit mindestens zwei, insbesondere in einer Ebene (z. B. Blendenebene) nebeneinander angeordneten Teilbeleuchtungsmitteln beleuchtet wird, wobei die Relativposition, insbesondere die Winkellage des Messobjektes zu dem Detektor in Abhängigkeit der Lichtintensitäten der von den Teillichtmitteln erzeugten, auf dem Detektor auftreffenden Lichtstrahlen verändert wird. Besonders bevorzugt wird als Maß für die Ausrichtgüte ein Verhältniswert der mit unterschiedlichen Teilbeleuchtungsmitteln erzeugten Lichtintensitäten ermittelt.

Besonders bevorzugt ist eine Ausführungsform, bei der die Relativposition, insbesondere die Winkellage des Messobjektes zum Detektor, durch Verstellen des Messobjektes und/oder des Detektors so lange verändert wird, bis das Verhältnis der Lichtintensitäten der von den Teilbeleuchtungsmitteln erzeugten, auf dem Detektor auftreffenden Lichtstrahlen einen definierten Wert erreicht. Für den Fall, dass die Teilbeleuchtungsmittel symmetrisch zu einer optischen Achse einer im Beleuchtungsstrahlengang angeordneten Linse, bzw. einer Linsenanordnung angeordnet sind, beträgt dieses Verhältnis der Lichtintensitäten 1.

Im Hinblick auf die Beurteilung der Lichtintensitäten gibt es unterschiedliche Möglichkeiten. So ist es möglich, manuell durch subjektive optische Wahrnehmung des Helligkeitseindrucks des Detektorbildes die Lichtintensität zu bewerten. Besonders bevorzugt ist eine Ausführungsform, bei der Lichtintensitäten der Lichtstrahlen der Teilbeleuchtungsmittel mit Hilfe des Detektors, insbesondere mit einer geeigneten Steuereinrichtung des Detektors ermittelt werden.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:

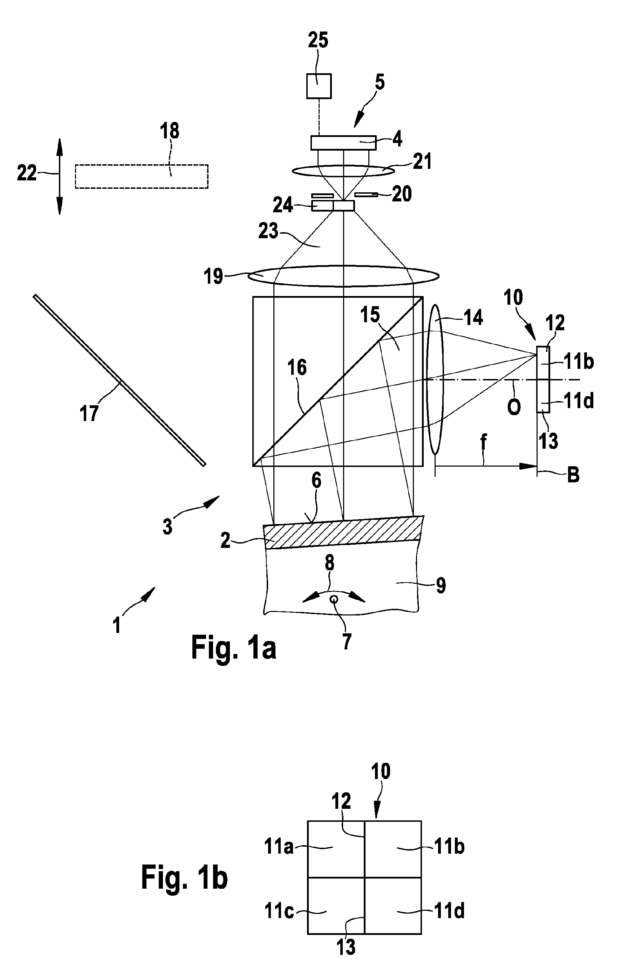

- Fig. 1a: eine schematische Darstellung einer interferometrischen Anordnung zum Vermessen eines Messobjektes, umfassend eine Anordnung zum Ausrichten des Messobjektes relativ zu einem Detektor und
- Fig. 1b: eine um 90° gedrehte Ansicht der aus mehreren Teilbeleuchtungsmitteln bestehenden Beleuchtungsmittel der Anordnung zum Ausrichten des Messobjektes relativ zu einem Detektor, wobei die Beleuchtungsmittel gleichzeitig als Beleuchtungsmittel der interferometrischen Anordnung dienen.

### Ausführungsformen der Erfindung

In den Figuren sind gleiche Bauteile und Bauteile mit der gleichen Funktion mit den gleichen Bezugszeichen gekennzeichnet.

In Fig. 1a ist eine interferometrische Anordnung 1 zum Vermessen von Flächen eines Messobjektes 2 gezeigt. Bei der dargestellten interferometrischen Anordnung 1 handelt es sich um ein flächenhaft messendes Interferometer, hier um ein Weißlichtinterferometer.

Der Aufbau umfasst eine Anordnung 3 zum Ausrichten der Winkellage des Messobjektes 2 relativ zu einem, einen CCD-Chip 4 einer Digitalkamera umfassenden Detektor 5. Um exakte interferometrische Vermessungen der Oberfläche des Messobjektes 2 durchführen zu können, muss die Oberfläche 6 des Messobjektes 2 in dem gezeigten Ausführungsbeispiel parallel zur Flächenerstreckung des CCD-Chips 4 des Detektors 5 ausgerichtet werden. Zum Verkippen (Verschwenken) des Messobjektes 2 um eine Schwenkachse 7 sind lediglich schematisch als Schwenkpfeile dargestellte Stellmittel 8 vorgesehen, die je nach Ausführungsform manuell oder automatisch betätigbar sind. Die Stellmittel 8 wirken dabei auf einen Träger 9, auf dem das Messobjekt 2 festgelegt ist.

Die Anordnung 3 zum Ausrichten des Messobjektes 2 relativ zum Detektor 5 umfasst Beleuchtungsmittel 10. Diese sind, wie aus Fig. 1b hervorgeht, als Vier-LED-Chip mit vier LEDs 11a, 11b, 11c, 11d ausgebildet. Dabei bilden die in der Zeichnungsebene oben angeordneten LEDs 11a, 11b gemeinsam erste Teilbeleuchtungsmittel 12 und die in der Zeichnungsebene darunter angeordneten LEDs 11c, 11d zweite Teilbeleuchtungsmittel 13. Dies bedeutet, dass die oberen LEDs 11a, 11b und die unteren LEDs 11c, 11d, jeweils als Einheit ansteuerbar sind. Es ist auch eine Ausführungsform mit vier Teilbeleuchtungsmitteln realisierbar, wobei in diesem Fall jede LED 11a, 11b, 11c, 11d selbstständig ansteuerbare Teilbeleuchtungsmittel bildet.

Wie sich aus Fig. 1a ergibt, sind die Teilbeleuchtungsmittel 12, 13 symmetrisch zu einer optischen Achse O einer Linse 14 eines mit Hilfe der Beleuchtungsmittel 10 erzeugten Beleuchtungsstrahlengangs 15 angeordnet. Die Funktion der Linse 14 ist es, die von den Beleuchtungsmitteln 10 ausgesandten, kurzkohärenten Lichtstrahlen zu parallelisieren. In einer den Fokus der Linse 14 durchsetzenden Blendenebene B der Linse 14 sind die Beleuchtungsmittel 10 angeordnet, wobei die Teilbeleuchtungsmittel 12, 13 in der Blendenebene B nebeneinander, hier übereinander, angeordnet sind.

Die einen Beleuchtungsstrahlengang 15 bildenden, von den Beleuchtungsmitteln 10 abgestrahlten Lichtstrahlen treffen auf einen Strahlenteiler 16, der in dem gezeigten Ausführungsbeispiel von einem teildurchlässigen, im 45°-Winkel zur optischen Achse O angeordneten Spiegel gebildet ist. Von dort aus wird ein Teil der von den Beleuchtungsmitteln 10 erzeugten Lichtstrahlen senkrecht auf die Oberfläche 6 des Messobjektes 2 gelenkt, von wo aus die Lichtstrahlen wieder zurück zum Strahlenteiler 16 und geradlinig durch diesen hindurch, durch eine Fokusierlinse 19, eine Aperturblende 20 und eine Linse 21 auf den Detektor 5, genauer den CCD-Chip 4 auftreffen. Um mittels der interferometrischen Anordnung 1 Interferenzerscheinungen detektieren zu können, müssen während der Vermessung des Messobjektes 2 die von der Objektfläche 6 zum Detektor 5 gelangenden (Messstrahlen) mit Referenzlichtstrahlen überlagert werden. Die Referenzlichtstrahlen werden mit Hilfe des Strahlenteilers aus dem Beleuchtungsstrahlengang 15 herausgeteilt - es handelt sich dabei um die von den Beleuchtungsmitteln 10 geradlinig durch den Strahlenteiler 10 strahlenden, nicht eingezeichneten Lichtstrahlen, die auf ihrem Weg auf einen Spiegel 17 treffen, das die Referenzlichtstrahlen auf ein, in diesem Ausführungsbeispiel von einem Referenzspiegel gebildetes Referenzelement 18 reflektieren. Von diesem werden die Referenzstrahlen auf den Spiegel 17 zurückreflektiert und von diesem auf den Strahlenteiler 16 gelenkt, der die Referenzstrahlen in Richtung auf den Detektor 5, genauer auf den CCD-Chip 4 rechtwinklig umlenkt. Da die Beleuchtungsmittel 10 nur kurzkohärentes Licht abstrahlen, treten Interferenzerscheinungen am Detektor 5 nur dann auf, wenn der Gangunterschied zwischen den eigentlichen Messstrahlen und den Referenzstrahlen geringer als die Kohärenzlänge der Lichtstrahlen, vorzugsweise null ist. Um diesen Gangunterschied einstellen zu können, ist das Referenzelement 18, wie durch Pfeile 22 angedeutet, linear verstellbar.

Die zuvor beschriebene Vermessung des Messobjektes 2 kann insbesondere bei ausschließlich kurzkohärentes Licht ausstrahlenden Beleuchtungsmitteln 10 nur dann durchgeführt werden, wenn das Messobjekt 2 zum Detektor 5 ausgerichtet - in diesem Fall parallel zur Flächenerstreckung des CCD-Chips 4 des Detektors 5 ausgerichtet ist. In diesem ausgerichteten Fall ergibt sich der mit dem Bezugszeichen 23 gekennzeichnete Abbildungsstrahlengang 23 (kombinierter Mess- und Referenzstrahlengang).

Zum Ausrichten des Messobjektes 2 relativ zum Detektor 5 werden die Teilbeleuchtungsmittel 12, 13 im Wechsel angesteuert. Für den Fall, dass das Messobjekt 2 exakt zum Detektor 5 ausgerichtet ist, bleibt die Lichtintensität (Helligkeitseindruck) des Detektorbildes (Kamerabildes) konstant, unabhängig davon, welche Teilbeleuchtungsmittel 12, 13 gerade angesteuert, d. h. aktiv sind. Ist das Messobjekt 2, wie im vorliegenden Fall nicht exakt in seiner Winkellage zum Detektor 5 ausgerichtet, ändert sich die am Detektor 5 feststellbare Lichtintensität in Abhängigkeit davon, welche Teilbeleuchtungsmittel 12, 13 gerade angesteuert, d. h. aktiv sind. In Fig. 1a ist gezeigt, dass nur die in der Zeichnungsebene oberen Teilbeleuchtungsmittel 12 angesteuert sind. Wie sich aus der Darstellung gemäß Fig. 1 weiter ergibt, treffen nicht sämtliche von den Teilbeleuchtungsmitteln 12 ausgesandten und von dem Messobjekt 2, genauer von der Oberfläche 6 reflektierten und durch den Strahlenteiler 16 strahlenden Lichtstrahlen auf dem CCD-Chip 4 auf, sondern werden von der Aperturblende 20 abgehalten, wie durch das Bezugszeichen 24 angedeutet, das einen Teilbildausschnitt vom Bild des Beleuchtungsmittels 10 kennzeichnet. Die Lichtintensität , der auf dem CCD-Chip 4 auftreffenden Lichtstrahlen wird mit Hilfe des Detektors 5 ermittelt und in einer Logikeinheit 25 (Steuereinrichtung des Detektors 5) ausgewertet und zwischengespeichert. Alternativ ist eine subjektive Bewertung der Helligkeit des Detektorbildes möglich. Daraufhin werden Teilbeleuchtungsmittel 12 deaktiviert und stattdessen die Teilbeleuchtungsmittel 13 angesteuert, wodurch sich die am Detektor 5 zu ermittelnde Lichtintensität ändert. In dem gezeigten Ausführungsbeispiel steigt die Lichtintensität, da ein kleinerer Anteil der von den Teilbeleuchtungsmitteln 13 erzeugten und an der Oberfläche 6 des Messobjektes 2 reflektierten Lichtstrahlen so abgelenkt wird, dass er nicht mehr auf den Detektor 5 auftrifft. Die Logikmittel 25 ermitteln diese Lichtintensität und setzen die zuletzt gemessene Lichtintensität mit der zwischengespeicherten zuvor gemessenen Lichtintensität in ein Verhältnis. Je nachdem, wie groß der Verhältniswert ist, muss das Messobjekt 2 mit Hilfe der Stellmittel 8 manuell oder automatisch in die eine oder andere Richtung um die Schwenkachse 7 verschwenkt werden. Eine optimale Ausrichtung wird erhalten, wenn bei dem gezeigten Ausführungsbeispiel der Verhältniswert 1 ist, also die Lichtintensität unabhängig davon, welche der Teilbeleuchtungsmittel 12, 13 gerade aktiviert sind, gleich bleibt.

Zur Durchführung der eigentlichen, zu Anfang beschriebenen interferometrischen Vermessung der Oberfläche 6 des Messobjekts 2 werden sämtliche Teilbeleuchtungsmittel 12, 13 der Beleuchtungsmittel 10 angesteuert, um somit eine möglichst große Lichtausbeute zu realisieren.

## Patentansprüche

1. Anordnung zum Ausrichten eines Messobjektes (2) relativ zu einem Detektor (5), mit einen Beleuchtungsstrahlengang (15) erzeugenden Beleuchtungsmitteln (10) zur Beleuchtung des Messobjektes (2) und mit Stellmitteln (8) zum Einstellen der Relativposition des Messobjektes (2) zu dem Detektor (5), wobei die Beleuchtungsmittel (10) mindestens zwei einzeln ansteuerbare Teilbeleuchtungsmittel (12, 13) aufweisen,
**dadurch gekennzeichnet,**
**dass** der Detektor (5) zum Bestimmen der Lichtintensitäten der von an dem Messobjekt (2) reflektierten und von den Teilbeleuchtungsmitteln (12, 13) erzeugten, auf dem Detektor (5) auftreffenden Lichtstrahlen ausgebildet ist.

2. Anordnung nach Anspruch 1,
**dadurch gekennzeichnet,**
**dass** die Teilbeleuchtungsmittel (12, 13) in einer Blendenebene (B) einer im Beleuchtungsstrahlengang (15) angeordneten Linse (14) oder einer Linsenanordnung nebeneinander angeordnet sind.

3. Anordnung nach einem der Ansprüche 1 oder 2,
**dadurch gekennzeichnet,**
**dass** die Teilbeleuchtungsmittel (12, 13) jeweils mindestens eine LED (11a, 11b, 11c, 11d) umfassen.

4. Anordnung nach einem der Ansprüche 2 oder 3,
**dadurch gekennzeichnet,**
**dass** die Teilbeleuchtungsmittel (12, 13) symmetrisch zu einer optischen Achse (O) der Linse (14) bzw. der Linsenanordnung angeordnet sind.

5. Anordnung nach einem der vorhergehenden Ansprüche,
**dadurch gekennzeichnet,**
**dass** die Teilbeleuchtungsmittel (12, 13) im Wechsel ansteuerbar sind.

6. Anordnung nach Anspruch 1,
**dadurch gekennzeichnet,**
**dass** der Detektor (5) auf Basis der Lichtintensitäten der Lichtstrahlen der im Wechsel angesteuerten Teilbeleuchtungsmittel (12, 13) einen optischen und/oder akustischen Indikator für die Ausrichtungsgüte erzeugend ausgebildet ist.

7. Anordnung nach einem der vorhergehenden Ansprüche,
**dadurch gekennzeichnet,**
**dass** die Stellmittel (8) manuell, insbesondere mittels einer Stellschraube, betätigbar und/oder automatisch, insbesondere in Abhängigkeit von mit dem Detektor (5) ermittelten Lichtintensitäten der Lichtstrahlen der Teilbeleuchtungsmittel (12, 13), ansteuerbar sind.

8. Anordnung nach einem der vorhergehenden Ansprüche,
**dadurch gekennzeichnet,**
**dass** die Teilbeleuchtungsmittel (12, 13) kurzkohärentes Licht aussendend ausgebildet sind.

9. Interferometrische Anordnung zum Vermessen eines Messobjektes (2) und mit einer Anordnung (3) zum Ausrichten des Messobjektes (2) relativ zu einem Detektor (5) nach einem der vorhergehenden Ansprüche.

10. Interferometrische Anordnung nach Anspruch 9,
**dadurch gekennzeichnet,**
**dass** die Beleuchtungsmittel (10) der Anordnung (3) zum Ausrichten des Messobjektes (2) relativ zu dem Detektor (5) die, vorzugsweise kurzkohärentes Licht ausstrahlenden, Beleuchtungsmittel (10) zum Beleuchten des Objektes (2) während der interferometrischen Messung sind.

11. Verfahren zum Ausrichten eines Messobjektes (2) relativ zu einem Detektor (5), insbesondere unter Verwendung einer Anordnung (3) nach einem der Ansprüche 1 bis 8, wobei das Messobjekt (2) mit Hilfe von Beleuchtungsmitteln (10) beleuchtet wird, **dadurch gekennzeichnet, dass** die Relativposition des Messobjektes (2) zu dem Detektor (5) in Abhängigkeit der Lichtintensität der am Messobjekt (2) reflektierten, von den Beleuchtungsmitteln (10) erzeugten und auf den Detektor (5) auftreffenden Lichtstrahlen verändert wird,
dass das Messobjekt (2), vorzugsweise im Wechsel, mit mindestens zwei Teilbeleuchtungsmitteln (12, 13) beleuchtet und die Relativposition das Messobjektes (2) zu dem Detektor (5) in Abhängigkeit der Lichtintensitäten der von den Teilbeleuchtungsmitteln (12, 13) erzeugten, am Messobjekt (2) reflektierten und auf den Detektor (5) auftreffenden Lichtstrahlen verändert wird.

12. Verfahren nach Anspruch 11,
**dadurch gekennzeichnet,**
**dass** die Relativposition so lange verändert wird, bis das Verhältnis der auf dem Detektor (5) auftreffenden, mit Hilfe der Teilbeleuchtungsmittel (12, 13) erzeugten Lichtintensitäten, zumindest näherungsweise, einen bestimmten Wert, vorzugsweise 1, erreicht.

13. Verfahren nach einem der Ansprüche 11 oder 12,
**dadurch gekennzeichnet,**
**dass** die Lichtintensitäten der auf dem Detektor (5) auftreffenden Lichtstrahlen der Teilbeleuchtungsmittel (12, 13) automatisch mit dem Detektor (5) ermittelt werden.

## Claims

1. Arrangement for aligning a measurement object (2) relative to a detector (5), having illumination means (10), which generate an illumination beam path (15), for illuminating the measurement object (2) and having actuating means (8) for setting the relative position of the measurement object (2) to the detector (5), wherein the illumination means (10) have at least two individually driveable partial illumination means (12, 13), **characterized in that** the detector (5) is configured for determining the light intensities of the light beams which were generated by the partial illumination means (12, 13), reflected at the measurement object (2) and are incident on the detector (5).

2. Arrangement according to Claim 1, **characterized in that** the partial illumination means (12, 13) are arranged next to one another in a stop plane (B) of a lens (14), or a lens arrangement, which is arranged in the illumination beam path (15).

3. Arrangement according to either of Claims 1 and 2, **characterized in that** the partial illumination means (12, 13) each comprise at least one LED (11a, 11b, 11c, 11d).

4. Arrangement according to either of Claims 2 and 3, **characterized in that** the partial illumination means (12, 13) are arranged symmetrically to an optical axis (O) of the lens (14) or the lens arrangement.

5. Arrangement according to one of the preceding claims, **characterized in that** the partial illumination means (12, 13) are driveable in alternation.

6. Arrangement according to Claim 1, **characterized in that** the detector (5) is configured such that it generates an optical and/or acoustic indicator for the alignment quality on the basis of the light intensities of the light beams from the partial illumination means (12, 13), which are driven in alternation.

7. Arrangement according to one of the preceding claims, **characterized in that** the actuating means (8) are manually operable, in particular by means of a set screw, or are automatically driveable, in particular in dependence on light intensities of the light beams from the partial illumination means (12, 13) which are ascertained using the detector (5).

8. Arrangement according to one of the preceding claims, **characterized in that** the partial illumination means (12, 13) are configured to emit short-coherent light.

9. Interferometric arrangement for measuring a measurement object (2) and having an arrangement (3) for aligning the measurement object (2) relative to a detector (5) according to one of the preceding claims.

10. Interferometric arrangement according to Claim 9, **characterized in that** the illumination means (10) of the arrangement (3) for aligning the measurement object (2) relative to the detector (5) are the illumination means (10), which preferably emit short-coherent light, for illuminating the object (2) during the interferometric measurement.

11. Method for aligning a measurement object (2) relative to a detector (5), in particular using an arrangement (3) according to one of Claims 1 to 8, wherein the measurement object (2) is illuminated with the aid of illumination means (10), **characterized in that** the relative position of the measurement object (2) to the detector (5) is changed in dependence on the light intensity of the light beams which were generated by the illumination means (10), reflected at the measurement object (2) and are incident on the detector (5), **in that** the measurement object (2) is illuminated with at least two partial illumination means (12, 13), preferably in alternation, and the relative position of the measurement object (2) to the detector (5) is changed in dependence on the light intensities of the light beams which were generated by the partial illumination means (12, 13), reflected at the measurement object (2) and are incident on the detector (5).

12. Method according to Claim 11, **characterized in that** the relative position is changed until the ratio of the light intensities which were generated with the aid of the partial illumination means (12, 13) and are incident on the detector (5) reaches a specific value, preferably 1.

13. Method according to either of Claims 11 and 12, **characterized in that** the light intensities of the light beams from the partial illumination means (12, 13) which are incident on the detector (5) are ascertained automatically using the detector (5).

## Revendications

1. Arrangement pour orienter un objet à mesurer (2) par rapport à un détecteur (5), comprenant des moyens d'éclairage (10) générant un trajet de rayon d'éclairage (15) destinés à éclairer l'objet à mesurer (2) et comprenant des moyens de positionnement (8) destinés à régler la position relative de l'objet à mesurer (2) par rapport au détecteur (5), les moyens d'éclairage (10) possédant au moins deux moyens d'éclairage partiels (12, 13) pouvant être commandés individuellement,
**caractérisé en ce**
**que** le détecteur (5) est configuré pour déterminer les intensités lumineuses des rayons lumineux réfléchis sur l'objet à mesurer (2) et générés par les moyens d'éclairage partiels (12, 13) qui sont incidents sur le détecteur (5).

2. Arrangement selon la revendication 1, **caractérisé en ce que** les moyens d'éclairage partiels (12, 13) sont disposés l'un à côté de l'autre dans un plan de diaphragme (B) d'une lentille (14) ou d'un arrangement de lentilles disposé(e) dans le trajet de rayon d'éclairage (15).

3. Arrangement selon l'une des revendications 1 ou 2, **caractérisé en ce que** les moyens d'éclairage partiels (12, 13) comprennent respectivement au moins une LED (11a 11b, 11c, 11d).

4. Arrangement selon l'une des revendications 2 ou 3, **caractérisé en ce que** les moyens d'éclairage partiels (12, 13) sont disposés symétriquement par rapport à un axe optique (0) de la lentille (14) ou de l'arrangement de lentilles.

5. Arrangement selon l'une des revendications précédentes, **caractérisé en ce que** les moyens d'éclairage partiels (12, 13) peuvent être commandés en alternance.

6. Arrangement selon la revendication 1, **caractérisé en ce que** le détecteur (5) est configuré pour générer un indicateur visuel et/ou sonore sur la base des intensités lumineuses des rayons lumineux des moyens d'éclairage partiels (12, 13) commandés en alternance.

7. Arrangement selon l'une des revendications précédentes, **caractérisé en ce que** les moyens de positionnement (8) peuvent être actionnés manuellement, notamment au moyen d'une vis de réglage et/ou peuvent être commandés automatiquement, notamment en fonction des intensités lumineuses des rayons lumineux des moyens d'éclairage partiels (12, 13) déterminées avec le détecteur (5).

8. Arrangement selon l'une des revendications précédentes, **caractérisé en ce que** les moyens d'éclairage partiels (12, 13) sont configurés pour émettre une lumière cohérente courte.

9. Arrangement interférométrique destiné à mesurer un objet à mesurer (2) et comprenant un arrangement (3) destiné à orienter l'objet à mesurer (2) par rapport à un détecteur (5) selon l'une des revendications précédentes.

10. Arrangement interférométrique selon la revendication 9, **caractérisé en ce que** les moyens d'éclairage (10) de l'arrangement (3) destiné à orienter l'objet à mesurer (2) par rapport au détecteur (5) sont les moyens d'éclairage (10) qui émettent de la lumière de préférence cohérente courte en vue d'éclairer l'objet (2) pendant la mesure interférométrique.

11. Procédé pour orienter un objet à mesurer (2) par rapport à un détecteur (5), notamment en utilisant un arrangement (3) selon l'une des revendications 1 à 8, l'objet à mesurer (2) étant éclairé à l'aide de moyens d'éclairage (10),
**caractérisé en ce que**
la position relative de l'objet à mesurer (2) par rapport au détecteur (5) est modifiée en fonction de l'intensité lumineuse des rayons lumineux réfléchis sur l'objet à mesurer (2), générés par les moyens d'éclairage (10) et qui sont incidents sur le détecteur (5),
**en ce que** l'objet à mesurer (2) est éclairé de préférence en alternance avec au moins deux moyens d'éclairage partiels (12, 13) et la position relative de l'objet à mesurer (2) par rapport au détecteur (5) est modifiée en fonction des intensités lumineuses des rayons lumineux générés par les moyens d'éclairage partiels (12, 13), réfléchis sur l'objet à mesurer (2) et qui sont incidents sur le détecteur (5).

12. Procédé selon la revendication 11, **caractérisé en ce que** la position relative est modifiée jusqu'à ce que le rapport des intensités lumineuses incidentes sur le détecteur (5) et générées à l'aide des moyens d'éclairage partiels (12, 13) atteigne au moins approximativement une valeur donnée, de préférence 1.

13. Procédé selon l'une des revendications 11 ou 12, **caractérisé en ce que** les intensités lumineuses des rayons lumineux des moyens d'éclairage partiels (12, 13) qui sont incidents sur le détecteur (5) sont déterminées automatiquement par le détecteur (5).
